# EUROPÄISCHE PATENTSCHRIFT

(11) **EP 3 235 606 B1**
(45) Veröffentlichungstag und Bekanntmachung des Hinweises auf die Patenterteilung: **09.03.2022**
(21) Anmeldenummer: 17167199.3
(22) Anmeldetag: 20.04.2017
(51) Int. Cl.: B25J 9/16

(54) **MEHRARM-ROBOTER FÜR KOMPLEXE KOMMISSIONIERAUFGABEN**
MULTI-ARM ROBOT FOR COMPLEX PICKING TASKS
ROBOT DISPOSANT DE PLUSIEURS BRAS POUR DES TÂCHES DE PRÉPARATION DE COMMANDE COMPLEXES

(30) Priorität: 20.04.2016 DE 102016107268
(43) Veröffentlichungstag der Anmeldung: 25.10.2017
(73) Patentinhaber: SSI Schäfer Automation GmbH (AT), 8051 Graz (AT)
(72) Erfinder: Winkler, Max, 8010 Graz (AT)
(74) Vertreter: Witte, Weller & Partner Patentanwälte mbB

(56) Entgegenhaltungen:
- US-B1- 9 089 969
- KIMURA NOBUTAKA ET AL: "Mobile dual-arm robot for automated order picking system in warehouse containing various kinds of products", 2015 IEEE/SICE INTERNATIONAL SYMPOSIUM ON SYSTEM INTEGRATION (SII), IEEE, 11. Dezember 2015 (2015-12-11), Seiten 332-338, XP032863356, DOI: 10.1109/SII.2015.7404942 [gefunden am 2016-02-10]
- Hitachi ET AL: "Control technology for mobile dual-arm robot for autonomous warehouse operation", , 25. August 2015 (2015-08-25), Seiten 1-4, XP055402273, Gefunden im Internet: URL:http://www.hitachi.com/New/cnews/month /2015/08/150825.pdf [gefunden am 2017-08-30]

## Beschreibung

Die vorliegende Erfindung betrifft einen Mehrarm-Roboter zur Durchführung einer komplexen Kommissionieraufgabe und insbesondere ein Lager- und Kommissioniersystem mit derartigen Mehrarm-Robotern.

Der Einsatz von unterschiedlichen Robotertypen zum Zwecke der Kommissionierung nimmt in jüngster Zeit zu. Ein erster Typ von Robotern wird zum Transport von Gütern innerhalb von Kommissionieranlagen eingesetzt. Ein Beispiel dafür sind fahrerlose Transportsysteme mit autonom verfahrbaren Fahrzeugen. Diese Roboter ersetzen konventionelle Stetigförderer. Ein zweiter Typ von Robotern wird zum Handhaben der Kommissioniergüter eingesetzt. Beispiele dafür sind Depalettier-Roboter bzw. Palettier-Roboter sowie Umsetzroboter.

Palettier-Roboter sind zum Beispiel beschrieben in den Dokumenten US 5,175,692 A, DE 40 27 497 A1, US 4,641,271 A, US 5,281,081 A und US 7,266,422 B1. Roboter zum Umsetzen von Gütern, zum Beispiel aus Lagerbehältern in Auftragsbehälter, sind bekannt aus den Dokumenten US 6,122,895 A, DE 198 20 537 A1, WO 03/091107 A1, US 2002/0067984 A1, US 6,011,998 A und DE 10 2008 046 325 A1.

Diesen Roboter-Anwendungen ist gemein, dass immer ein (einziger) Roboterarm Aufgaben sequentiell erfüllt (siehe zum Beispiel DE 10 2008 046 325 A1), wobei sehr hohe Geschwindigkeiten erzielt werden können. Es können auch mehrere Roboterarme hintereinander angeordnet werden, um eine große Anzahl von Aufgaben (Umsetzvorgänge) parallel zu erledigen, wie es zum Beispiel in der US 6,122,895 A offenbart ist. Oftmals sind die Roboter dazu eingerichtet, ihre Manipulatoren zum Erledigen unterschiedlicher Aufgaben vor Ort zu wechseln, wie es exemplarisch in der DE 40 27 497 A1 offenbart ist.

Das Dokument US 2016/0288324 A1 offenbart eine bewegliche Vorrichtung mit Robotermanipulatoren und Förderern zur vereinfachten Bewegung eines Gegenstands. Fig. 7 zeigt ein Fahrzeug mit zwei unabhängig zueinander bewegbaren Roboterarmen, die auf einer Oberseite des Fahrzeugs mit einer Fördertechnik dazwischen angeordnet sind, wo Gegenstände, die unabhängig voneinander von den Armen gegriffen werden können, abgelegt werden können.

Die Dokumente AT 011337 U1, DE 20 2006 020 963 U1 und US 2001/0056313 A1 offenbaren Datenbanken zur Hinterlegung von Prozessdaten bezüglich einer Manipulation von Gegenständen.

Konventionelle Roboter, die im Bereich der Intralogistik eingesetzt werden, sind nicht in der Lage, komplexe Kommissionieraufgaben zu lösen. Unter einer komplexen Kommissionieraufgabe wird nachfolgend allgemein eine Aufgabe verstanden, die mit den oben genannten konventionellen Robotern nicht gelöst werden kann.

Zur Lösung von komplexen Kommissionieraufgaben werden üblicherweise Menschen eingesetzt. Menschen sind dazu in der Lage, ungeplante und unerwartete Situationen sofort zu erkennen und aufgrund ihrer Erfahrung eine Lösung zu ersinnen. Als einfaches Beispiel sei die Situation genannt, in welcher ein gewünschter Artikel chaotisch in einer Kiste zusammen mit ungewünschten Artikeln bevorratet ist. Die Lage und Position des gewünschten Artikels ist somit vorab nicht bekannt. Der gewünschte Artikel könnte in der Kiste durch die unerwünschten Artikel verdeckt bzw. blockiert sein. In dieser Situation erkennt der Mensch, dass er den gewünschten Artikel nicht ohne weiteres greifen kann. In diesem Fall greift der Mensch in die Kiste und bewegt die dort befindlichen Artikel solange relativ zueinander, bis er den gewünschten Artikel erkennt bzw. sieht. Der gewünschte Artikel könnte dann sichtbar unterhalb unerwünschter Artikel liegen. Im letzteren Fall stellt sich also eine neue Situation ein, die der Mensch erkennt und für die er wiederum eine Lösung ersinnt. Um den gewünschten Artikel greifen zu können, hält bzw. schiebt der Mensch die unerwünschten Artikel zur Seite. Dann ist der Weg zum gewünschten Artikel frei, den der Mensch greift und umsetzt. Die oben genannten konventionellen Roboter sind zum Lösen derartig komplexer Kommissionieraufgaben nicht in der Lage, insbesondere nicht zum gleichzeitigen Greifen und Beiseiteschieben.

Der Artikel "Mobile Dual-Arm Robot for Automated Order Picking System in Warehouse Containing Various Kinds of Products" (2015 IEEE/SICE International Symposium on System Integration (SII), IEE, 11-13 Dezember 2015, Meijo University, Nagoya, Japan, Seiten 332-338, XP032863356) offenbart den Einsatz eines Zweiarm-Roboters in einem Lager- und Kommissioniersystem zur Durchführung einer komplexen Kommissionieraufgabe, wobei vier unterschiedliche Manipulatoren eingesetzt werden, die basierend auf Kamerainformationen, die mittels Kameras gewonnen werden, die an den Armen angebracht sind, agieren.

Der Artikel "Control technology for mobile dual-arm robot for autonomous warehouse operation" (News release Hitachi Ltd., 25. August 2015, Seiten 1-4, XP055402273) beschreibt das System des zuvor genannten Artikels grob.

Das Dokument US 9,089,969 B1 offenbart einen Roboter zum Depalettieren und Palettieren von Gegenständen, wobei der Roboter autonom verfahrbar ist.

Es ist daher eine Aufgabe der vorliegenden Erfindung, ein Lager- und Kommissioniersystem vorzusehen, in welchem komplexe Kommissionieraufgaben automatisiert, insbesondere situationsabhängig und in Echtzeit, bearbeitet werden können.

Diese Aufgabe wird durch ein Lager- und Kommissioniersystem zur Durchführung einer komplexen Kommissionieraufgabe gemäß Anspruch 1 gelöst.

Der Mehrarm-Roboter ist in der Lage, Aufgaben zu lösen und durchzuführen, die aufgrund ihrer Komplexität normalerweise von Menschen beim Kommissionieren durchgeführt werden. Mehrere Arme sind am Basisgestell befestigt. Jeder der Arme kann einen eigenen spezifischen Manipulator aufweisen. Die Erfassungseinheit erstellt ein "Bild" der Situation und liefert diese Daten an die Steuereinheit des Roboters. Die Steuereinheit wertet diese Daten aus und entscheidet in Abhängigkeit von der erfassten Situation, welche Handlungen durchzuführen sind, um die Kommissionieraufgabe zu lösen. Die Auswertung des "Bildes" erfolgt vorzugsweise in Echtzeit. Die Steuereinheit ist eingerichtet, eine Vielzahl unterschiedlicher Situationen zu erkennen, wobei vorzugsweise zu jeder hinterlegten Situation auch eine entsprechende Lösung hinterlegt ist.

Somit ist die Erfindung in der Lage, Aufgaben, die normalerweise nur durch Menschen erledigt werden können, mit Robotern zu erledigen. Die Erfindung sieht die dazu erforderlichen strukturellen Merkmale vor. Die Erfindung dringt in einen Bereich innerhalb der Kommissioniertechnologie ein, den bisher niemand betreten hat.

Vorzugsweise ist die Steuereinheit mit einer Operationsdatenbank verknüpft. Die Operationsdatenbank umfasst eine Vielzahl verschiedener Operationen, wobei jede der Operationen mindestens eine Manipulation und/oder eine Bewegung umfasst, wobei die Manipulationen umfassen: Aufnehmen; Abgeben; Vereinzeln; Öffnen; Schließen; Niederhalten; Abhalten; Aufhalten und/oder Ausrichten der Gegenstände; und wobei die Bewegungen umfassen: Heben, Senken, Versetzen und/oder Umsetzen (d.h. translatorische und rotatorische Bewegungen).

In der Operationsdatenbank sind Anweisungen für die Arme und Manipulatoren hinterlegt. Diese Anweisungen ermöglichen es den Manipulatoren und Armen, Bewegungen auszuführen, die zur Lösung der komplexen Kommissionieraufgabe erforderlich sind.

Ferner ist es von Vorteil, wenn die Steuereinheit mit einer Gegenstandsdatenbank verknüpft ist, wo eine Vielzahl verschiedener Gegenstandseigenschaften, wie z.B. Form, Gewicht, Label, Handhabbarkeit, hinterlegt sind, um die Gegenstände mittels Analyse der Daten der Erfassungseinheit zu identifizieren und um die Gegenstände in geeigneter Weise zu manipulieren.

Die Steuereinheit kann beim Analysieren der erfassten Situation zusätzliche Informationen aus dieser Datenbank ziehen. Eine Glaskugel muss zum Beispiel vorsichtiger, also mit weniger Kraft, gehandhabt werden als eine Metallkugel. Eine Steige mit Joghurtbechern ist vorzugsweise von unten, d.h. unterstützend, zu fassen und nicht an der Seite zu greifen. Ferner wird die Joghurtsteige besser mit einer Hubplattform von unten gehandhabt als mit einer Saugeinrichtung von oben. All diese Informationen können zusätzlich aus der Gegenstandsdatenbank extrahiert werden und beim Bewerten der Situation und beim Auffinden einer entsprechenden Lösung berücksichtigt werden.

Insbesondere ist die Steuereinheit mit einer Situationsdatenbank verknüpft, wo eine Vielzahl verschiedener Situationen hinterlegt ist. Diese Situationen können zum Beispiel eine chaotische Verteilung von Gegenständen in Behältern, die Tatsache, dass ein Behälter verschlossen ist, die Tatsache, dass die Gegenstände noch mit einer Umverpackung versehen sind und Ähnliches umfassen. Jede dieser Situationen ist mit einer Operation (Lösung des Problems) verknüpft. Die Lösung kann darin zu sehen sein, dass der richtige Gegenstand ausgewählt wird, dass ungewünschte Gegenstände zur Seite geräumt werden, dass der Behälter geöffnet wird, dass eine Umverpackung entfernt wird und Ähnliches.

Die Situationsdatenbank unterstützt die Arm-Steuereinheit beim Auswählen einer geeigneten Lösung (Operation) zur Durchführung der komplexen Kommissionieraufgabe.

Bei einer besonderen Ausgestaltung weist das System ferner auf: ein Lager; und/oder eine Arbeitsstation, insbesondere eine Kommissionierstation, eine Packstation oder eine Teach-In-Station.

Das Lager und die Arbeitsstationen stellen die typischen Orte dar, wo die Mehrarm-Roboter zum Einsatz kommen, wenn es um die Erledigung von Kommissionieraufgaben geht. Im Lager können die Quellbehälter z.B. durch die Roboter ein- und ausgelagert werden. An der Kommissionierstation können z.B. die Artikel aus den Quellbehältern in die Zielbehälter umgesetzt werden. An einer Packstation können die Artikel zum Beispiel auf eine Auftragspalette geschichtet werden. An einer Teach-In-Station können Artikel aus dem Wareneingang vereinnahmt werden, indem zum Beispiel Umverpackungen entfernt, die Artikel identifiziert und ggf. mit entsprechenden systeminternen Kennzeichnungen zwecks Identifizierung versehen werden.

Weiter ist es von Vorteil, wenn die Manipulatoren aufweisen: Greifer; Sauger; Messer; Tacker; Klebebandspender/Klebepistolen; und/oder Waagen.

Vorzugsweise ist die Erfassungseinheit am Basisgestell befestigt. Insbesondere ist das Basisgestell mobil ausgebildet. Zusätzlich können die Manipulatoren mit Sensoren zum Regeln und/oder Überwachen der Manipulationen versehen sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektive Ansicht eines Mehrarm-Roboters an einem Kommissionier platz beim Ausführen einer komplexen Kommissionieraufgabe;
- Fig. 2: ein Strukturdiagramm eines Lager- und Kommissioniersystems;
- Fig. 3: ein Strukturdiagramm einer Operationsdatenbank;
- Fig. 4: ein Strukturdiagramm einer Gegenstandsdatenbank; und
- Fig. 5: ein Strukturdiagramm einer komplexen Kommissionieraufgabe.

In der nachfolgenden Beschreibung werden ähnliche Elemente, Komponenten, Teile und Merkmale mit ähnlichen Bezugszeichen versehen, wobei die hier enthaltenen Offenbarungen sinngemäß auf ähnliche Elemente, Komponenten, Teile und Merkmale mit ähnlichen Bezugszeichen übertragen werden können. Lage- und Positionsangaben, wie zum Beispiel "oben", "unten", "seitlich", "quer", "längs" und dergleichen, sind auf die unmittelbar beschriebene(n) Figur(en) bezogen und sind bei einer Lage- und Positionsänderung sinngemäß auf die neue Lage bzw. Position zu übertragen.

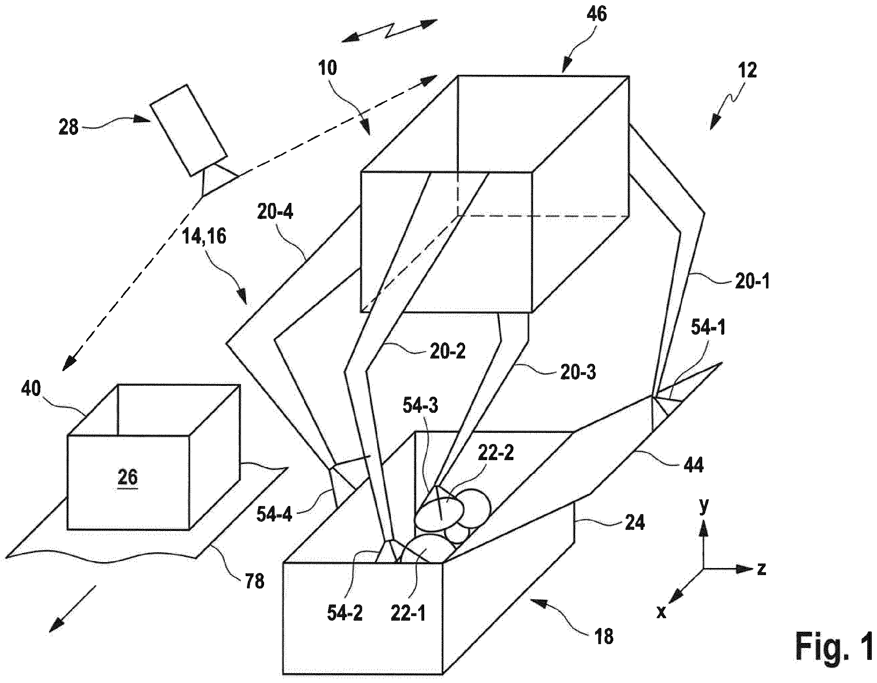

Ferner ist zu beachten, dass Richtungsangaben und Orientierungen zugrunde gelegt werden, die sich grundsätzlich an die in der (Intra-)Logistik üblichen Bezeichnungen anlehnen. Folglich werden eine Längsrichtung mit "X", eine Querrichtung mit "Z" und eine Höhenrichtung mit "Y" bezeichnet. Exemplarisch kann der Fig. 1 ein damit korrespondierendes (hier exemplarisch kartesisches) Koordinatensystem XYZ entnommen werden.

Nachfolgend werden zu kommissionierende Güter (d.h. Artikel, Waren, Gebinde, Stückgüter, etc.) üblicherweise in Form von sog. (Lager-)Bestandseinheiten ("SKU", Storage Keeping Units) in einem Lager bevorratet, um gemäß einem "Kommissionier- bzw. Kundenauftrag" zusammengestellt zu werden. Ein solcher Auftrag liegt üblicherweise als Datensatz vor. Jeder Auftrag kann ein Kopffeld, ein Prioritätsfeld und/oder ein Artikelfeld aufweisen. Das Kopffeld kann unter anderem Informationen zu den Kunden, wie z.B. eine Kundenadresse oder eine Kunden-Identifikationsnummer, sowie Bestell-/ Auftragsnummern aufweisen. Das Prioritätsfeld enthält Angaben darüber, ob es sich um einen normalen Auftrag oder um einen Eilauftrag handelt. Jeder Auftrag umfasst im Artikelfeld eine oder mehrere Auftragszeilen. Die Auftragszeile spezifiziert eine Anzahl sowie einen zu kommissionierenden Artikel bzw. Artikeltyp. Die Artikel werden üblicherweise als Stückgüter (piece picking) und/oder Gebinde (case picking) bereitgestellt.

Fig. 1 zeigt eine perspektivische Darstellung eines Mehrarm-Roboters 10 in einem Lager- und Kommissioniersystem 12, von dem lediglich eine Arbeitsstation 14 in Form einer Kommissionierstation 16 gezeigt ist. Fig. 1 zeigt eine Situation, in welcher der Mehrarm-Roboter 10 während eines Kommissioniervorgangs (Artikelentnahme von Quelle und Abgabe an Quelle) mehrere Gegenstände 18 gleichzeitig mit seinen Armen 20 manipuliert, indem der Roboter 10 z.B. einen Artikel 22 aus einem Quellbehälter 24 entnimmt und den Artikel 22 an einen Zielbehälter 26 abgibt, wie es nachfolgend noch näher erläutert werden wird, während gleichzeitig weitere Aktionen durchgeführt werden.

Ferner ist eine Erfassungseinheit 28 (z.B. eine Kamera) vorgesehen, die eine Szenerie erfasst, in welcher der Roboter 10 und die Gegenstände 18 enthalten sind. Die Erfassungseinheit 28 erzeugt vorzugsweise Bilddaten, aus denen die Positionen und Orientierungen der Gegenstände 18 und/oder des Roboters 10 bzw. dessen Arme 20 (rechnerisch) ableitbar sind.

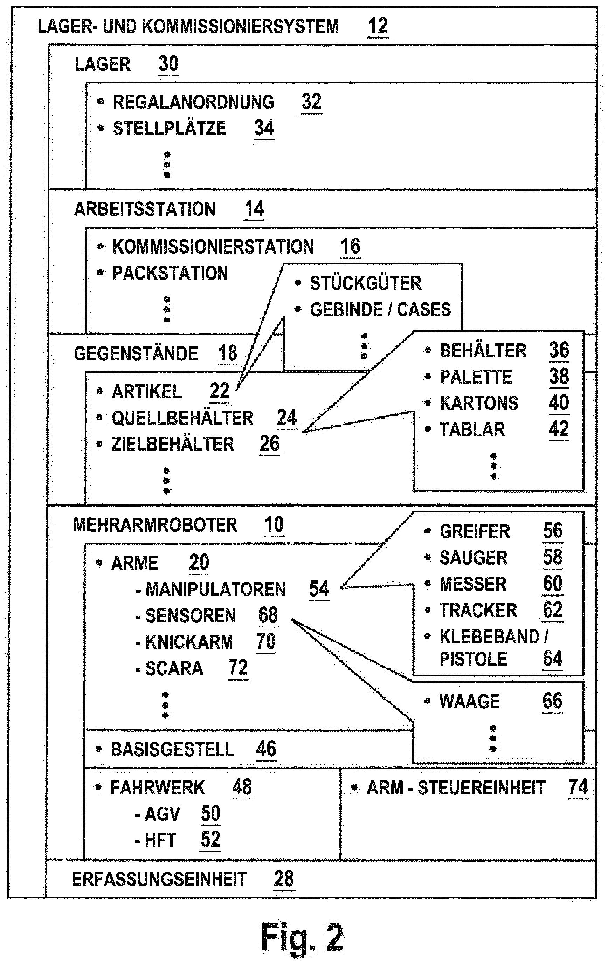

Fig. 2 zeigt ein Blockdiagramm des Lager- und Kommissioniersystems 12, das nachfolgend auch kurz als "System 12" bezeichnet werden wird. Im System 12 wird kommissioniert. Unter dem Begriff "Kommissionieren" ist das Zusammenstellen von Gütern gemäß einem Auftrag zu verstehen. Das Kommissionieren hat zum Ziel, aus einer Gesamtmenge von Artikeln (Sortiment) Teilmengen aufgrund von Anforderungen (Aufträgen) zusammenzustellen (VDI 3590). Das System 12 kann sowohl zum Kommissionieren nach dem Prinzip "Ware-zum-Mann" als auch zum Kommissionieren nach dem Prinzip "Mann-zur-Ware" eingesetzt werden.

Das System 12 umfasst neben der Arbeitsstation 14, dem (Mehrarm-)Roboter 10 sowie der Erfassungseinheit 28 ein (nicht dargestelltes) Lager 30, wo die zu kommissionierenden Artikel 22 bevorratet sind. Das Lager 30 kann ein oder mehrere Regalanordnungen 32 mit (hier nicht näher gezeigten und bezeichneten) Regalen und/oder einen oder mehrere Stellplätze 34 umfassen. Die Regalanordnungen 32 dienen üblicherweise der Bevorratung der Quellbehälter 24 und/oder der Zielbehälter 26. Die Quellbehälter 24 sowie die Zielbehälter 26 können durch Behälter 36, Paletten 38, Kartons 40, Tablare 42 und dergleichen realisiert sein. Der Quellbehälter 24 in der Fig. 1 ist zum Beispiel ein Behälter 36 mit einem Deckel 44. Der in der Fig. 1 gezeigte Zielbehälter 26 ist zum Beispiel ein Karton 40 ohne Deckel. Die Quellbehälter 24 werden üblicherweise in der Regalanordnung 32 in Regalfächern bereitgestellt. An den Stellplätzen 34 können zum Beispiel Paletten 38 auf dem Boden bereitgestellt werden.

Der Roboter 10 weist neben seinen Armen 20 ein Basisgestell 46 auf. Das Basisgestell 46 ist in der Fig. 1 exemplarisch in Form von miteinander verbundenen Streben realisiert, die z.B. kubisch angeordnet sind. Es versteht sich, dass das Basisgestell 46 des Weiteren mit einem (hier nicht näher gezeigten) Fahrwerk 48 verbunden sein kann, damit sich der entsprechende Roboter 10 innerhalb des Systems 12, vorzugsweise frei, bewegen kann, insbesondere um zu solchen Orten zu gelangen, wo komplexe Kommissionieraufgaben durchzuführen sind, die nachfolgend noch näher erläutert werden. Das Fahrwerk 48 ermöglicht eine Implementierung des Roboters 10 in Form eines AGV 50 (Autonomous Guided Vehicle), d.h. als fahrloses Transportfahrzeug (FTF). Das Fahrwerk 48 kann aber auch alternativ so ausgebildet sein, dass der Roboter 10 an eine Hängefördertechnik (HFT) 52 gekoppelt werden kann, um sich durch das System 12 zu bewegen. Hier ist jede Art von Mobilität möglich.

Die Arme 20, die beweglich am Basisgestell 46 befestigt sind, sind jeweils mit mindestens einem Manipulator 54 verbunden. Jeder der Arme 20 ist mit einem eigenen Manipulator 54 verbunden, der während der Durchführung der komplexen Kommissionieraufgabe vorzugsweise nicht getauscht wird. Exemplarische Manipulatoren 54 sind: Greifer bzw. Greifeinrichtungen 56, Sauger bzw. Saugeinrichtungen 58, Messer 60, Tacker 62, Klebebandrollen/Klebepistolen 64 und dergleichen.

Die Arme 20 und/oder die Manipulatoren 54 können ferner mit jeweils mindestens einem Sensor 68 versehen sein, um die Handhabung der Gegenstände 18 (in Echtzeit) zusätzlich neben der Erfassungseinheit 28 direkt zu überwachen. Exemplarische Sensoren 68 sind: Temperatursensoren, Drucksensoren, Kraftsensoren, Spannungs- und Stromsensoren, lichtempfindliche Elemente, bildgebende Elemente wie Kameras, Gewichtssensoren (Waage 66) und Ähnliches. Die Sensoren 68 werden eingesetzt, um dem Roboter 10 während der Ausführung der komplexen Kommissionieraufgabe Rückmeldung zu geben. So lässt sich die komplexe Kommissionieraufgabe noch genauer überwachen. So kann festgestellt werden, ob die komplexe Kommissionieraufgabe richtig oder falsch ausgeführt wird. So kann auch festgestellt werden, ob zusätzliche Maßnahmen ergriffen werden müssen, um die komplexe Kommissionieraufgabe erfolgreich abzuschließen. Die Erfassungseinheit 28 wird, sofern Sensoren 68 vorhanden sind, vorzugsweise nur zur Erfassung und Analyse der Situation, nicht aber zur Überwachung der Durchführung der komplexen Kommissionieraufgabe eingesetzt.

Die Arme 20 können als Knickarme 70, Scara-Arme 72 oder dergleichen ausgeführt sein.

Des Weiteren weist der Mehrarm-Roboter 10 eine Arm-Steuereinheit 74 auf. Die Arm-Steuereinheit 74 ist eingerichtet, die Bewegungen der Arme 20 zu planen, zu koordinieren und/oder zu überwachen. Die Arm-Steuereinheit 74 kann zentral oder dezentral implementiert sein. Die Arm-Steuereinheit 74 kann eine Datenverarbeitungseinheit, wie z.B. Prozessoren, Mirkoprozessoren, Datenspeicher, Datenschnittstellen, Kommunikationsschnittstellen und Ähnliches aufweisen, die zur Planung und Durchführung der komplexen Kommissionieraufgabe(n) eingerichtet sind, indem entsprechende Algorithmen vorgesehen sind und abgearbeitet werden. Insbesondere eine Analyse und Erkennung bestimmter Situationen kann durch die Arm-Steuereinheit 74 vorgenommen werden.

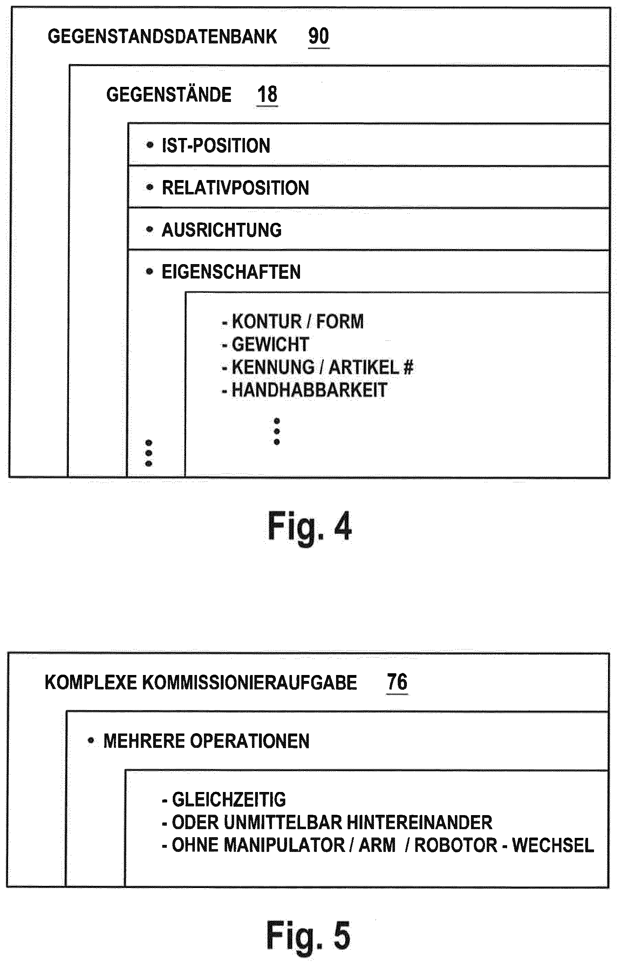

Zurückkehrend zur Fig. 1 ist eine exemplarische komplexe Kommissionieraufgabe 76 gezeigt. Die Definition einer komplexen Kommissionieraufgabe 76 wird nachfolgend unter Bezugszahme auf Fig. 5 noch näher gegeben werden. Die komplexe Kommissionieraufgabe 76 umfasst mehrere Manipulationschritte, die zeitlich parallel und/oder zeitlich sequentiell ohne Manipulatorwechsel durch mehrere der Arme 20 durchzuführen sind.

In der Fig. 1 ist die komplexe Kommissionieraufgabe 76 darin zu sehen, dass der spezielle Artikel 22-1 aus dem Quellbehälter 24 entnommen und in den Zielbehälter 26 gegeben werden soll. Der Zielbehälter 26 wird zum Beispiel auf einer Fördertechnik 78 in der Kommissionierstation 16 bereitgestellt. Der Quellbehälter 24 könnte anfänglich geschlossen sein, weil der Deckel 44 geschlossen ist. Der Quellbehälter 24 muss also geöffnet werden, indem der Deckel 44 geöffnet wird. Dieser Öffnungsvorgang kann eine Teilaufgabe der komplexen Kommissionieraufgabe der Fig. 1 darstellen. Das Öffnen des Deckels 44 wird mit einem ersten Arm 20-1 durchgeführt, der den Deckel 44 nachfolgend weiterhin offen hält.

Ein zweiter Arm 20-2 hält, während des Öffnens und/oder auch später, den Quellbehälter 24 nieder, damit sich eine Position des Quellbehälters 24 während der Durchführung der Manipulationsschritte nicht ändert.

Ein weiterer, dritter Arm 20-3 schafft Platz für einen noch weiteren, vierten Arm 20-4, mit dem der gewünschte Artikel 22-1 gegriffen werden soll. Der dritte Arm 20-3 greift dazu den nicht benötigten Artikel 22-2 und bewegt diesen Artikel 22-2 zur Seite, weil er den Weg zum gewünschten Artikel 22-1 verdeckt. Die Tatsache bzw. Situation, dass der gewünschte Artikel 22-1 durch den nicht benötigten Artikel 22-2 verdeckt wird, kann mit der Erfassungseinheit 28 erfasst und durch die Arm-Steuereinheit 74 entsprechend analysiert und interpretiert werden. Wenn der dritte Arm 20-3 den Artikel 22-2 zur Seite bewegt hat und dort hält, ist ein Weg für den vierten Arm 20-4 zum gewünschten Artikel 22-1 frei ist. Sobald der Weg für den vierten Arm 20-4 frei ist, wird der Arm 20-4 zur Position des Gegenstands 22-1 bewegt. Diese Bewegung des vierten Arms 20-4 kann wiederum das Ergebnis einer entsprechenden Situationserkennung sein, die generell vorzugsweise kontinuierlich und insbesondere in Echtzeit durchgeführt wird. Der Manipulator 54-4 des vierten Arms 20-4 nimmt den gewünschten Artikel 22-2 dann auf, indem der gewünschte Artikel 22-1 gegriffen, angesaugt oder Ähnliches wird. Dann wird der vierte Arm 20-4 aus dem Quellbehälter 24 zum Zielbehälter 26 bewegt, wo der Manipulator 54-4 den gewünschten Artikel 22-1 an den Zielbehälter 26 abgibt, indem er den Artikel 22-1 z.B. über dem Zielbehälter 26 abwirft. Es werden also mehrere Arme 22 gleichzeitig betätigt, um die komplexe Kommissionieraufgabe 76 durchzuführen.

All diese Manipulationen bzw. Manipulationsschritte von der Erfassungseinheit 28 kontinuierlich bzw. zyklisch überwacht werden, um situationsabhängig auf unerwartete Ereignisse reagieren zu können. Während der simultanen Manipulation der zahlreichen Gegenstände 18 (hier Quellbehälter 24 und Artikel 22-1 und 22-2) könnte es zum Beispiel vorkommen, dass sich die Gegenstände 18 unerwartet relativ zu einander bewegen, so dass sich eine ursprüngliche erfasst und analysierte Situation, auf der die eigentliche Planung der Manipulationen basiert, abrupt verändert. In diesem Fall ist es erforderlich, situationsabhängig weitere und/oder andere Manipulationen durchzuführen, um das gewünschte eigentliche Ziel der komplexen Kommissionieraufgabe 76 (Umsetzen des Artikels 22-1) erfolgreich durchzuführen. Zu diesem Zweck müssen Bilddaten, die die Erfassungseinheit 28 erzeugt, ausgewertet und in entsprechende Manipulationen durch die Arme 20 umgewandelt werden. Zu diesem Zweck können eine Operationsdatenbank 80, eine Gegenstandsdatenbank 90 und/oder eine Situationsdatenbank eingesetzt werden.

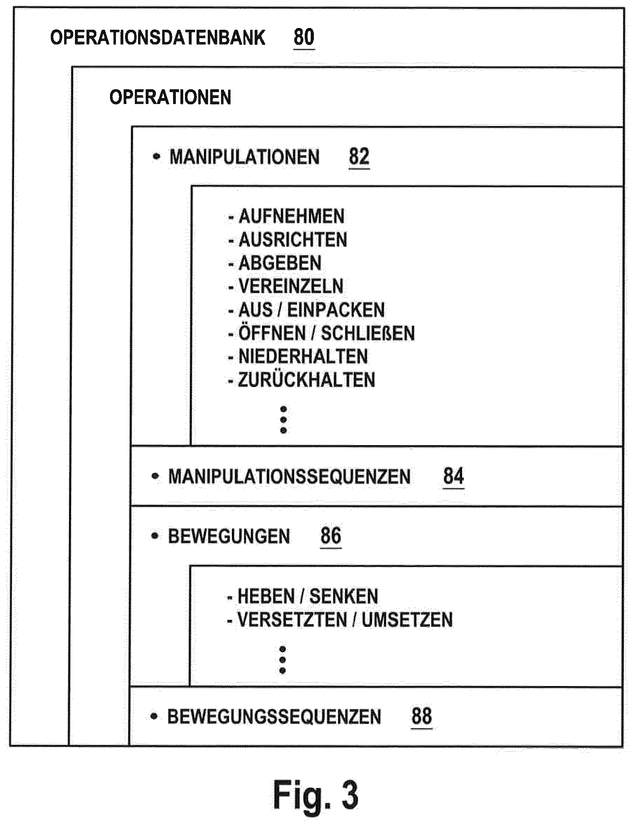

Fig. 3 zeigt eine allgemeine Struktur der Operationsdatenbank 80.

In der Operationsdatenbank 80 sind eine Vielzahl von grundsätzlich möglichen Manipulationen 82 hinterlegt, die mit den Manipulatoren 54 durchgeführt werden können, mit denen der jeweilige Roboter 10 ausgestattet ist. Exemplarische Manipulationen 82 sind: Aufnehmen, Bewegen, Abgeben, Vereinzeln, Aus-/Einpacken, Öffnen/Schließen, Niederhalten, Zurückhalten, Anheben, Absenken, Ausrichten und Ähnliches. Die Manipulationen 82 stellen Aktionen dar, die von den Manipulatoren 54 durchgeführt werden können.

Ferner können in der Operationsdatenbank 80 Manipulationssequenzen 84 hinterlegt sein. Die Manipulationssequenzen 84 setzen sich aus einer fest vorgegebenen Reihenfolge von einzelnen Manipulationen 82 zusammen. Eine mögliche Manipulationssequenz 84 könnte zum Beispiel dadurch definiert sein, dass mittels eines Greifers 56 einer der Gegenstände 18 zuerst gegriffen, dann für eine gewisse Zeitdauer gehalten und anschließend freigegeben wird. Genauso ist es aber auch möglich, dass der Greifer 56 während einer ersten Zeitdauer mit einer ersten, geringeren Kraft greift und während einer späteren zweiten Zeitdauer mit einer höheren Kraft greift.

Neben den Manipulationen 82 und den Manipulationssequenzen 84 für die Manipulatoren 54 umfasst die Operationsdatenbank 80 auch Bewegungen 86 bzw. Bewegungssequenzen 88 der Arme 20. Eine Operation setzt sich üblicherweise aus einer Bewegung 86 (oder einem Innehalten) des entsprechenden Arms 20 und einer Manipulation 82 des zugehörigen Manipulators zusammen. Eine komplexe Kommissionieraufgabe 76 ist durch mehrere Operationen definiert, wie es unter Bezugnahme auf Fig. 5 noch näher erläutert werden wird.

Ein Beispiel für eine komplexe Kommissionieraufgabe 76 kann darin bestehen, den Quellbehälter 24 aus dem Regalfach zu nehmen und richtig auszurichten, um anschließend einen Gegenstand 18 entnehmen zu können. Weitere Beispiele für komplexe Kommissionieraufgaben 76 sind: Vereinzeln eines Mehrgebindes, zum Beispiel durch Aufschneiden der Verpackung zwecks Einzelkommissionierung; Niederhalten von bereits gepackten Gegenständen, während neue Gegenstände von oben aufgestapelt werden; seitliche Stützen von bereits gestapelten Gegenständen während eines Stapelvorgangs; Labeln (z.B. mit Klebeetikett versehen) von Gegenständen, während des Kommissioniervorgangs; oder ein Ummanteln (Versandsicherung) einer Untermenge von zu packenden Gegenständen während des Umsetzens aus dem Quellbehälter in den Zielbehälter 26.

Fig. 4 zeigt eine allgemeine Struktur einer Gegenstandsdatenbank 90, die wie die Operationsdatenbank 80 ebenfalls mit der Arm-Steuereinheit 74 verknüpft ist.

Die Gegenstandsdatenbank 90 beinhaltet gegenstandsspezifische Daten, wie zum Beispiel: Ist-Position, Relativposition, Ausrichtung und/oder weitere Eigenschaften, wie zum Beispiel Kontur/Form, Gewicht, Kennung/Artikelnummer, Handhabbarkeit, etc. des entsprechenden Gegenstands 18. Die Ist-Position (z.B. der Lagerplatz) kann im System 12 fest hinterlegt (Lagerplatzverwaltung, Warenwirtschaftssystem, etc.) sein und wird zum Beispiel im Falle einer MzW-Kommissionierung benötigt, bei der der Roboter 10 den Gegenstand 18 aus einem Regalfach oder von einem Palettenstellplatz entnehmen muss, wobei die Position des entsprechenden Gegenstands 18 fix ist und vorab bekannt ist. Wenn die Position des Gegenstands 18 hingegen nicht fix ist, wird die Relativposition benötigt. In diesem Fall kann die Erfassungseinheit 28 eingesetzt werden, um Bilddaten zu erzeugen, aus denen wiederum die Relativposition des Gegenstands 18 zum Beispiel mittels Bilderkennungs-Algorithmen hergeleitet wird. Die Bilderkennungsalgorithmen können sich dabei an den Eigenschaften des Gegenstands 18 orientieren (zum Beispiel Form bzw. Kontur) sowie am allgemeinen Lager-Layout, um sich global innerhalb des Systems 12 einzupeilen. Dies ist insbesondere dann von Vorteil, wenn die Erfassungseinheit 28 nicht stationär im System 12 vorgesehen ist, sondern mit dem Roboter 10 verbunden ist, der sich, vorzugsweise frei, durch das System 12 bewegt.

Des Weiteren kann die Arm-Steuereinheit 74 mit einer hier nicht näher gezeigten Situationsdatenbank verknüpft sein. In der Situationsdatenbank sind eine Vielzahl verschiedener Situationen inklusive möglicher Lösungen hinterlegt. Die Steuereinheit 74 kann aus den Bilddaten der Erfassungseinheit 28 zum Beispiel ableiten, dass der Quellbehälter 24 noch verschlossen ist. In diesem Beispiel ist in der Situationsdatenbank hinterlegt, dass der Quellbehälter 24 zuerst zu öffnen ist, und ferner kann hinterlegt sein, was zu tun ist, um den Quellbehälter 24 zu öffnen (Schneiden, Verpackung entfernen, Deckel 44 anheben, etc.). So kann zum Beispiel hinterlegt sein, dass zuerst der Deckel 44 geöffnet werden muss, bevor die Artikel 22, die sich im Quellbehälter 24 befinden, gegriffen oder zur Seite bewegt werden können, was wiederum eine andere Situation beschreibt.

Eine noch weitere Situation, die im Beispiel der Fig. 1 auftritt, ist darin zu sehen, dass die Artikel 22 innerhalb des Quellbehälters 24 chaotisch verteilt sind, so dass der gewünschte Gegenstand 22-1 durch andere Gegenstände 18, wie zum Beispiel durch mehrere der Artikel 22-2 verdeckt und für die Erfassungseinheit 28 und/oder die Sensoren 68 vorest gar nicht zu sehen ist. Auch diese "Situation" kann in der Situationsdatenbank hinterlegt sein, vorzugsweise mit der entsprechenden Lösung, nämlich die Gegenstände 18 innerhalb des Quellbehälters 24 mit einem weiteren Arm 20 solange zu bewegen, bis der gewünschte Artikel 22-1 sichtbar wurde und identifiziert wurde.

Die möglichen Situationen sind vielfältig.

Deshalb kann die Steuereinheit 74 ergänzend und/oder alternativ mit einer (künstlichen) Intelligenz ausgestattet sein, um auch Situationen auflösen zu können, für die vorab keine Lösung (Operation) hinterlegt ist. Die Steuereinheit 74 kann aus erfolgreich bewältigten Situationen lernen.

Fig. 5 zeigt ein Strukturdiagramm der komplexen Kommissionieraufgabe 76. Die komplexen Kommissionieraufgaben 76 zeichnen sich dadurch aus, dass mehrere Operationen gleichzeitig, d.h. durch mehrere Arme 20 gleichzeitig, oder unmittelbar hintereinander, d.h. durch mehrere Arme 20 ohne Manipulatorwechsel, durchzuführen sind, um die komplexe Kommissionieraufgabe 76 (zum Beispiel Umsetzen, Auspacken, Einpacken, Öffnen, Verschließen, Vereinzeln, etc.) zu lösen. Wichtig dabei ist, dass weder ein Wechsel eines Manipulators 54, noch ein Wechsel eines Arms 20 oder ein Wechsel des Roboters 10 stattfindet, während die Kommissionieraufgabe 76 durchgeführt wird.

Die komplexe Kommissionieraufgabe 76 unterscheidet sich also von herkömmlichen Kommissionieraufgaben dadurch, dass die komplexe Kommissionieraufgabe 76 keine Sequenz von konventionellen Kommissionieraufgaben (zum Beispiel reines Umsetzen eines Artikels 20) darstellt. Eine konventionelle Kommissionieraufgabe wird von einem einzigen Arm durchgeführt, indem der Arm mehrere Operationen zeitlich hintereinander, ggf. inklusive einem Manipulatorwechsel durchführt, wohingegen bei der Erfindung mehrere der Arme 20, insbesondere ohne Manipulatorwechsel, im Wesentlichen gleichzeitig agieren. Eine komplexe Kommissionieraufgabe 76 lässt sich üblicherweise nicht sequentiell lösen bzw. nur sehr ineffizient mit sequentiellen Schritten lösen.

### Bezugszeichenliste:

- 10: Mehrarmroboter
- 12: Lager- und Kommissioniersystem
- 14: Arbeitsstation
- 16: Kommissionierstation
- 18: Gegenstände
- 20: Arme
- 22: Artikel
- 24: Quellbehälter
- 26: Zielbehälter
- 28: Erfassungseinheit
- 30: Lager
- 32: Regalanordnung
- 34: Stellplätze
- 36: Behälter
- 38: Palette
- 40: Kartons
- 42: Tablar
- 44: Deckel
- 46: Basisgestell
- 48: Fahrwerk
- 50: AGV
- 52: HFT
- 54: Manipulatoren
- 56: Greifer
- 58: Sauger
- 60: Messer
- 62: Tacker
- 64: Klebeband/Pistole
- 66: Waage
- 68: Sensoren
- 70: Knickarm
- 72: Scara
- 74: Arm-Steuereinheit
- 76: Komplexe Kommissionieraufgabe
- 78: Fördertechnik
- 80: Operationsdatenbank
- 82: Manipulationen
- 84: Manipulationssequenzen
- 86: Bewegungen
- 88: Bewegungssequenzen
- 90: Gegenstandsdatenbank

## Patentansprüche

1. Lager- und Kommissioniersystem (12) zur Durchführung einer komplexen Kommissionieraufgabe (76), bei der mehrere Gegenstände (18) gleichzeitig manipuliert werden müssen, das aufweist:
eine Erfassungseinheit (28), die eine Kamera ist und die eingerichtet ist, zumindest die Gegenstände (18) zyklisch hinsichtlich ihrer Position und Ausrichtung zu erfassen und entsprechende Daten zu erzeugen; und
einen Mehrarm-Roboter (10), der aufweist:
ein Basisgestell (46);
eine Vielzahl von Armen (20), die unabhängig voneinander gleichzeitig beweglich sind und die am Basisgestell (46) befestigt sind;
eine Vielzahl von Manipulatoren (54), wobei jeder der Arme (20) mit einem der Manipulatoren (54) verbunden ist; und
eine Arm-Steuereinheit (74), die eingerichtet ist, die Arme (20) situationsabhängig in armspezifische Positionen und armspezifische Ausrichtungen zu bewegen, so dass mehrere der Arme (20) gleichzeitig und gemeinsam die komplexe Kommissionieraufgabe durchführen, indem die Gegenstände (18) mit den entsprechenden Manipulatoren (54) gemäß einer vorgegebenen Operation manipuliert werden, und die eingerichtet ist, Positionen und Ausrichtungen der Gegenstände (18) relativ zum Mehrarm-Roboter (10) zyklisch aus den
Daten der Erfassungseinheit (28) zu bestimmen,
wobei die komplexe Kommissionieraufgabe (76) mehrere Manipulationsschritte umfasst, die zeitlich parallel und/oder zeitlich sequentiell ohne Manipulatorwechsel durch mehrere der Arme (20) durchgeführt werden;
**dadurch gekennzeichnet, dass** einer der Arme (20) und/oder der Manipulatoren mit mindestens einem Sensor (68) versehen ist, der eine Handhabung der Gegenstände (18) zusätzlich neben der Erfassungseinheit (28) direkt überwacht, um dem Mehrarm-Roboter (10) während einer Ausführung der komplexen Kommissionieraufgabe (76) Rückmeldung zu geben, wodurch feststellbar ist, ob die komplexe Kommissionieraufgabe (76) richtig oder falsch ausgeführt wird und ob zusätzliche Maßnahmen ergriffen werden müssen, um die komplexe Kommissionieraufgabe (76) erfolgreich abzuschließen, wobei der mindestens eine Sensor (68) aus einer Gruppe ausgewählt ist, die aufweist: einen Temperatursensor, einen Drucksensor, einen Kraftsensor, einen Spannungs- oder Stromsensor und einen Gewichtssensor.

2. System (12) nach Anspruch 1, wobei die Arm-Steuereinheit (74) mit einer Operationsdatenbank (80) verknüpft ist, die eine Vielzahl verschiedener Operationen umfasst, wobei jede der Operationen mindestens eine Manipulation (82) und/oder eine Bewegung (86) umfasst, wobei die Manipulationen (82) umfassen: Aufnehmen; Abgeben; Vereinzeln; Öffnen; Schließen; Niederhalten; Abhalten; Aufhalten und/oder Ausrichten der Gegenstände (18); und wobei die Bewegungen (86) umfassen: Heben, Senken, Versetzen und/oder Umsetzen.

3. System (12) nach Anspruch 1 oder 2, wobei die Arm-Steuereinheit (74) mit einer
Gegenstandsdatenbank (90) verknüpft ist, wo eine Vielzahl verschiedener Gegenstandseigenschaften, insbesondere Form, Gewicht, Label, Handhabbarkeit, hinterlegt sind, um die Gegenstände (18) mittels Analyse der Daten der Erfassungseinheit (28) zu identifizieren und um die Gegenstände (18) in geeigneter Weise zu manipulieren.

4. System (12) nach einem der Ansprüche 1 bis 3, wobei die Arm-Steuereinheit (74) mit
einer Situationsdatenbank verknüpft ist, wo eine Vielzahl verschiedener Situationen hinterlegt ist, wobei jede der Situation mit einer der Operationen verknüpft ist, um die Durchführung der komplexen Kommissionieraufgabe (76) sicherzustellen.

5. System (12) nach einem der Ansprüche 1 bis 4, das ferner aufweist: ein Lager (30); und/oder eine Arbeitsstation (14), insbesondere eine Kommissionierstation (16), eine Packstation oder eine Teach-In-Station.

6. System (12) nach einem der Ansprüche 1 bis 5, wobei die Manipulatoren (54) aufweisen: Greifer (56); Sauger (58); Messer (60); Tacker (62); und/oder Klebebandspender/Klebepistolen (64).

7. System (12) nach einem der Ansprüche 1 bis 6, wobei die Erfassungseinheit (28) am Basisgestell (46) befestigt ist und das Basisgestell (46) vorzugsweise mobil ausgebildet ist.

8. System (12) nach einem der Ansprüche 1 bis 7, wobei die Manipulatoren (54) mit dem mindestens einen Sensor (68) zum Regeln und/oder Überwachen der Manipulationen (82) versehen sind.

## Claims

1. A storage and picking system (12) for conducting a complex picking task (76), which requires manipulation of several objects (18) at the same time, comprising:
a detection unit (28), which is a camera and configured to detect cyclically at least the objects (18) with regard to position and orientation thereof, and generate corresponding data; and
a multi-arm robot (10) comprising:
a basic frame (46);
a plurality of arms (20) simultaneously movable, independently from each other, and being mounted to the basic frame (46);
a plurality of manipulators (54), wherein each of the arms (20) is connected to one of the manipulators (54); and
an arm-control unit (74) configured to move the arms (20), dependent on situation, into arm-specific positions and arm-specific orientations so that several ones of the arms (20) conduct the complex picking task simultaneously and together by manipulating the objects (18) with the corresponding manipulators (54) in accordance with preset operation, and being configured to determine cyclically positions and orientations of the objects (18) relative to the multi-arm robot (10) from the data of the detection unit (28),
wherein the complex picking task (76) includes several manipulation steps temporally performed in parallel and/or sequentially, without an exchange of manipulator, by several ones of the arms (20);
**characterized in that** one of the arms (20) and/or manipulators is provided with at least one sensor (68) monitoring directly, in addition to the detecting unit (28), handling of the objects (18) in order to provide feedback to the multi-arm robot (10) during conduction of the complex picking task (76), thereby allowing determination whether the complex picking task (76) is conducted correct or wrong, and whether additional measures need to be taken for completing the complex picking task (76) successfully, wherein the at least one sensor (68) is selected from a group comprising: temperature sensor, pressure sensor, force sensor, voltage or current sensor, and weight sensor.

2. The system (12) of claim 1 wherein the arm-control unit (74) is associated with an operation database (80) including a plurality of different operations, wherein each of the operations includes at least one manipulation (82) and/or movement (86), wherein the manipulations (82) include: picking; delivering; separating; opening; closing; holding down; keeping off; stopping; and/or orientating the objects (18); and wherein the movements (86) include: elevating, lowering, displacing, and/or transferring.

3. The system (12) of claim 1 or 2, wherein the arm-control unit (74) is associated with an object database (90), where a plurality of different object characteristics, in particular shape, weight, label, handling capability, is recorded for identifying the objects (18) by means of an analysis of the data of the detection unit (28), and for manipulating the objects (18) appropriately.

4. The system (12) of any of claims 1 to 3, wherein the arm-control unit (74) is associated with a situation database, where a plurality of different situations is recorded, wherein each of the situations is associated with one of the operations for ensuring the conduction of the complex picking task (76).

5. The system (12) of any of claims 1 to 4 further comprising: a warehouse (30); and/or a work station (14), in particular a picking station (16), packing station, or teach-in-station.

6. The system (12) of any of claims 1 to 5, wherein the manipulators (54) comprise: a gripping device (56); suction device (58); knife (60); tacker (62); and/or an adhesive-tape dispenser/glue gun (64).

7. The system (12) of any of claims 1 to 6, wherein the detection unit (28) is mounted to the basic frame (46), and the basic frame (46) is preferably configured mobile.

8. The system (12) of any of claims 1 to 7, wherein the manipulators (54) are provided with the at least one sensor (68) for controlling and/or monitoring the manipulators (82).

## Revendications

1. Système de stockage et préparation de commandes (12) permettant d'effectuer une tâche de préparation de commandes complexe (76) dans laquelle plusieurs objets (18) doivent être manipulés en même temps, présentant :
une unité de détection (28) qui est une caméra et qui est aménagée pour détecter au moins les objets (18) de manière cyclique quant à leur position et à leur orientation et pour générer des données correspondantes ; et
un robot à plusieurs bras (10) qui présente :
un bâti de base (46) ;
une pluralité de bras (20) qui sont mobiles en même temps de manière indépendante les uns des autres et qui sont fixés au bâti de base (46) ;
une pluralité de manipulateurs (54), chacun des bras (20) étant relié à l'un des manipulateurs (54) ; et
une unité de commande de bras (74) qui est aménagée pour déplacer les bras (20) en fonction de la situation dans des positions spécifiques au bras et dans des orientations spécifiques au bras de sorte que plusieurs des bras (20) effectuent en même temps et ensemble la tâche de préparation de commandes complexe en manipulant les objets (18) avec les manipulateurs correspondants (54) selon une opération prédéfinie, et qui est aménagée pour déterminer de manière cyclique des positions et des orientations des objets (18) par rapport au robot à plusieurs bras (10) à partir des données de l'unité de détection (28),
la tâche de préparation de commandes (76) complexe comprenant plusieurs étapes de manipulation qui sont effectuées de manière parallèle et/ou séquentielle dans le temps sans changement de manipulateur par plusieurs des bras (20) ;
**caractérisé en ce que** l'un des bras (20) et/ou des manipulateurs est muni d'au moins un capteur (68) qui surveille directement une manutention des objets (18) en plus à côté de l'unité de détection (28) afin de fournir un retour d'information au robot à plusieurs bras (10) pendant l'exécution de la tâche de préparation de commandes complexe (76) moyennant quoi on peut constater si la tâche de préparation de commandes complexe (76) est effectuée correctement ou incorrectement et si des mesures supplémentaires sont à prendre afin d'achever la tâche de préparation de commandes complexe (76) avec succès, ledit au moins un capteur (68) étant sélectionné dans un groupe qui présente : un capteur de température, un capteur de pression, un capteur de force, un capteur de tension ou de courant et un capteur de poids.

2. Système (12) selon la revendication 1, dans lequel l'unité de commande de bras (74) est associée à une base de données d'opérations (80) qui comprend une pluralité de différentes opérations, chacune des opérations comprenant au moins une manipulation (82) et/ou un mouvement (86), les manipulations (82) comprenant : saisir ; déposer ; séparer ; ouvrir ; fermer ; retenir ; intercepter ; arrêter et/ou aligner les objets (18) ; et les mouvements (86) comprenant : soulever, baisser, déplacer et/ou transposer.

3. Système (12) selon la revendication 1 ou 2, dans lequel l'unité de commande de bras (74) est associée à une base de données d'objets (90) dans laquelle une pluralité de différentes propriétés d'objet, en particulier la forme, le poids, la désignation, la maniabilité, est mémorisée pour identifier les objets (18) au moyen de l'analyse des données de l'unité de détection (28) et pour manipuler les objets (18) de façon adéquate.

4. Système (12) selon l'une quelconque des revendications 1 à 3, dans lequel l'unité de commande de bras (74) est associée à une base de données de situations dans laquelle une pluralité de différentes situations est mémorisée, chacune des situations étant associée à l'une des opérations afin d'assurer l'exécution de la tâche de préparation de commandes complexe (76).

5. Système (12) selon l'une quelconque des revendications 1 à 4, qui présente en outre : un stock (30) ; et/ou une station de travail (14), en particulier une station de préparation de commandes (16), une station de conditionnement ou une station d'apprentissage.

6. Système (12) selon l'une quelconque des revendications 1 à 5, dans lequel les manipulateurs (54) présentent : des préhenseurs (56) ; des ventouses (58) ; des lames (60) ; des agrafeuses (62) ; et/ou des dérouleurs de bande adhésive/ des pistolets à colle (64).

7. Système (12) selon l'une quelconque des revendications 1 à 6, dans lequel l'unité de détection (28) est fixée au bâti de base (46) et le bâti de base (46) est réalisé de préférence de manière mobile.

8. Système (12) selon l'une quelconque des revendications 1 à 7, dans lequel les manipulateurs (54) sont munis dudit au moins un capteur (68) pour réguler et/ou surveiller les manipulations (82).
